Europäisches Patentamt

European Patent Office

Office européen des brevets

(11) Veröffentlichungsnummer: **0 065 087**
**B2**

(12) **NEUE EUROPÄISCHE PATENTSCHRIFT**

(45) Veröffentlichungstag der neuen Patentschrift:
25.11.87

(21) Anmeldenummer: **82102145.8**

(22) Anmeldetag: **17.03.82**

(51) Int. Cl.⁴: **F 16 F 1/18,** B 29 D 3/02,
B 60 G 11/02

(54) **Biegefeder aus Faserverbundwerkstoff.**

(30) Priorität: **19.05.81 DE 3119856**

(43) Veröffentlichungstag der Anmeldung:
**24.11.82 Patentblatt 82/47**

(45) Bekanntmachung des Hinweises auf die Patenterteilung:
**22.02.84 Patentblatt 84/8**

(45) Bekanntmachung des Hinweises auf die Entscheidung
über den Einspruch:
**25.11.87 Patentblatt 87/48**

(84) Benannte Vertragsstaaten:
**FR GB IT**

(56) Entgegenhaltungen:
**EP-A-0 005 916**
**EP-A-0 040 531**
**EP-A-0 042 068**
**CH-A-463 770**
**DE-A-1 504 196**
**DE-B-1 139 703**
**DE-C-689 077**
**DE-C-1 139 703**
**DE-C-1 164 757**
**FR-A-1 411 011**
**FR-A-1 596 868**
**FR-A-2 246 387**
**GB-A-842 815**
**GB-A-2 041 489**
**US-A-3 142 598**
**US-A-3 549 449**
**US-A-3 900 357**
**US-A-4 051 289**

(73) Patentinhaber: **Messerschmitt- Bölkow- Blohm
Gesellschaft mit beschränkter Haftung, Robert-
Koch- Strasse, D-8012 Ottobrunn (DE)**

(72) Erfinder: **Drachenberg, Franz, Ing. grad.,
Brunnenstrasse 61, D-8011 Baldham (DE)**
Erfinder: **Oefner, Walter, Dipl.- Ing., Kistlerweg 2,
D-8151 Mitterdarching (DE)**

EP 0 065 087 B2

## Beschreibung

Die Erfindung betrifft eine Biegefeder oder dergleichen biegebeanspruchtes Bauteil mit elastischer Verformung unter Belastung, insbesondere ein gekrümmtes Federblatt, der im Oberbegriff des Patentanspruchs 1 angegebenen Gattung.

Bei einer derartigen Feder, beispielsweise gemäß der US-A-3 142 598, besteht zumeist das einzelne gekrümmte Federblatt aus über die gesamte Blattlänge in unidirektionaler Orientierung sich erstreckenden harzimprägnierten Glasfadersträngen, zwischen denen das gehärtete Harz als Matrix die Funktion eines Bindemittels erfüllt. Zwangsläufig muß somit diese Harzmatrix auch die aus der Biegebeanspruchung der Faserstränge resultierenden Kräfte aufnehmen. Das ist bei Federdurchbiegungen gegen die Federkrümmung insofern kritisch, weil die Harzmatrix die Faserstränge unter den dann wirksamen Querzugkräften gegen ein Auf- und insbesondere Auseinanderspleißen sichern muß. Eine Bindungswirkung in Federbiegungsrichtung gegen diese Querzugkräfte (radiale Komponenten der Normalkräfte aus der Momentenbeanspruchung der Feder) muß die Harzmatrix um so mehr erfüllen können, je größer die Federdicke und die ursprüngliche Federkrümmung sind. Folglich werden an die Festigkeit der Harzmatrix hohe Anforderungen gestellt, denen, wie sich gezeigt hat, in der Regel nicht befriedigend nachgekommen werden kann.

Der Erfindung liegt daher die Aufgabe zugrunde, bei einer Biegefeder der eingangs genannten Art die Festigkeitsanforderungen an die Bindungsmasse der Faserstränge zu senken.

Diese Aufgabe ist gemäß dem Kennzeichen des Patentanspruchs 1 gelöst, wonach die Fasereinlagen als hauptsächlich in Federbiegungsrichtung wirksame Verstärkungen der Bindungsmasse und somit zu deren Entlastung wenigstens von jeglichen Querkräften aus der Federdurchbiegung beitragen. Soweit aus einer Federdurchbiegung resultierende Schubkräfte in senkrechter Wirkungsrichtung zu den radial zur Federkrümmungsachse wirkenden (Querzug- oder -druck-)Kräften aufzunehmen sind, braucht diesbezüglich die einzelne Fasereinlage bloß in entsprechend kreuzweiser Faserorientierung mit ihren hauptsächlichen Fasern weitere Fasern aufzuweisen.

Die nicht vorveröffentlichte EP-A-42 068 zeigt eine Ringfeder bestehend aus parallel zur Ringebene angeordneten unidirektionalen, mit Kunstharz getränkten Faserlagen mit Zwischenlagen und Außenlagen aus mit Kunstharz getränkten Gewebeschichten. Dieses Dokument fällt unter Artikel 54(3) EPÜ.

Anhand der nachfolgenden Ausführungsbeispiele werden die Erfindung sowie die in den Unteransprüchen gekennzeichneten Ausgestaltungen weiter verdeutlicht. Hierzu zeigt die Zeichnung in

Fig. 1 perspektivisch einen Abschnitt eines gekrümmten Federblattes aus faserverstärktem Kunststoff, teilweise aufgebrochen,

Fig. 2 ein von diesem Federblatt in seiner Fasergewebeeinlage verschiedenes Federblatt.

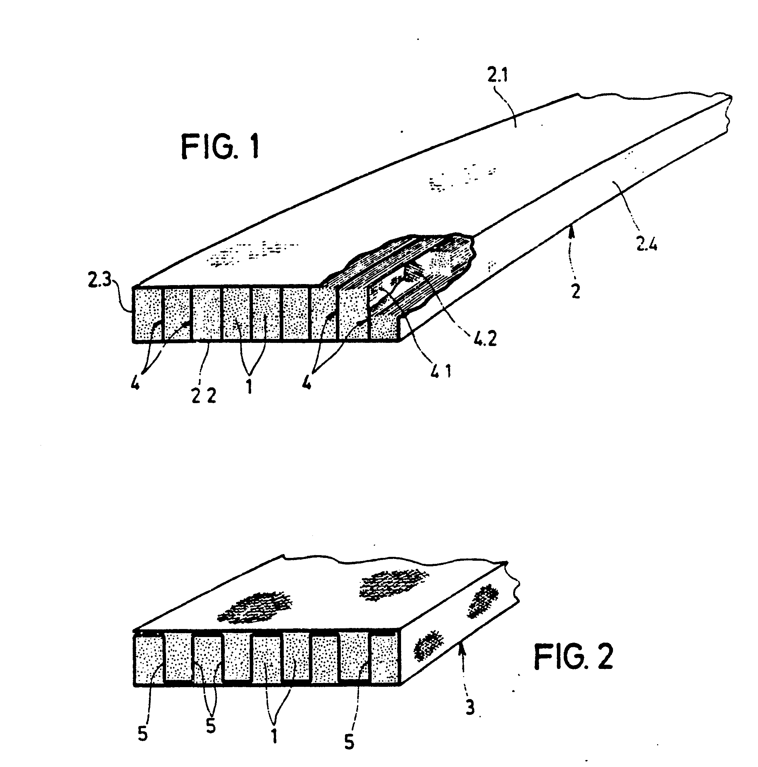

Die (Biege-)Federblätter gemäß Fig. 1 und 2 bestehen im Grunde aus in einer Harz- oder dergleichen Bindungsmasse eingebetteten Glas- oder dergleichen Chemie-Fasersträngen 1 in unidirektionaler Faserorientierung über die gesamte Federlänge. Die Faserstränge 1 sind von einer Hülle 2 bzw. 3 aus einem Gewebe oder Gelege gleichen Materials umschlossen. Um den Blattaufbau gegen ein auf- bzw. Auseinanderspleißen der Faserstränge 1 unter einer Durchbiegung des Federblattes zu sichern, ist die Bindungsmasse durch Fasereinlagen 4 verstärkt, bei denen Fasern radial zur Federkrümmungsachse, d. h. - unter Durchbiegung des Federblattes gegen dessen Krümmung - in Wirkungsrichtung der aus der Federbiegebeanspruchung resultierenden Querzugkräfte orientiert sind. Diesbezüglich ist gemäß Fig. 1 im Aufbau der einzelnen Fasereinlage 4 ein Fasergewebe (oder -gelege) 4.1 mit einer 0/90°-Faserorientierung gewählt, von dem zwangsläufig nur Fasern einer Richtung den vorgenannten Zweck erfüllen; bezüglich dieser Fasern erfüllen die in Wirkungsrichtung der unidirektionalen Faserstränge 1 orientierten Fasern des Fasergewebes 4.1 bloß eine Bindungsfunktion für die Fertigung des Federblattes.

Um zugleich eine Entlastung der Bindungsmasse hinsichtlich einer (durch Torsion des Federblattes) möglichen Schubbeanspruchung im Federblattinneren sicherzustellen, ist schließlich gemäß Fig. 1 der Fasereinlagenaufbau noch durch ein Fasergewebe (oder -gelege) 4.2 mit einer von mindestens $\pm 30°$-, vorzugsweise $\pm 45°$-Faserorientierung ergänzt.

Während bei dem Blattaufbau gemäß Fig. 1 die Fasereinlagen 4 als Querstege über die Federdicke an den von der Hülle 2 gebildeten Decklagen 2.1, 2.2 der Federober- bzw. Federunterseite fußen und hiermit, erforderlichenfalls über eine T-förmige Profilierung ihrer jeweiligen Stoßkante, in einer Klebeverbindung stehen, sind stattdessen bei dem Blattaufbau gemäß Fig. 2 die entsprechenden Fasereinlagen 5 als Querstege über die Federdicke Abschnitte der die Faserstränge 1 umschließenden Hülle 3; über die Federbreite zu einem Mäander geformt bündelt dabei die Hülle 3 die Faserstränge 1. Bei diesem (dem Blattaufbau gemäß Fig. 1 gegenüber) kompakteren Blattaufbau werden selbstverständlich sämtliche Decklagen der Hülle 3, sofern wie bei den Fasereinlagen 4 neben einem 0/90°-Fasergewebe oder -gelege noch ein $\pm 45°$-Fasergewebe oder -gelege je Fasereinlage 5 gewählt ist, entsprechend auch dieses $\pm 45°$-Fasergewebe oder -gelege aufweisen im Unterschied zu den Decklagen 2.1, 2.2 des Blattaufbaus gemäß Fig. 1 bloß aus einem 0/90°-Fasergewebe oder -gelege. Demgegenüber werden die beiden Seitendecklagen 2.3, 2.4 gemäß Fig. 1 eine den Fasereinlagen 4 entsprechende Zusammensetzung, also ein 0/90°-Fasergewebe bzw. -gelege und ein ± 45°-Fasergewebe bzw. -gelege aufweisen.

## Patentansprüche

1. Biegefeder in Form eines gekrümmten Federblattee bestehend aus in einer Bindungemasse eingebetteten Fasersträngen in unidirektionaler Faserorientierung über die Federlänge, dadurch gekennzeichnet, daß über die Federbreite in der Bindungsmasse zwischen den unidirektionalen Fasersträngen (1) zusätzlich eine Mehrzahl von Fasereinlagen (4; 5) mit Abstand zueinander vorgesehen sind, wobei diese sich in der Federbiegungsebene erstrecken und jeweils zumindest eine hauptsächliche Faserorientierung radial zur Federkrümmungsachse aufweisen.

2. Biegefeder nach Anspruch 1, dadurch gekennzeichnet, daß die einzeine Fasereinlage (4; 5) weitere Fasern aufweist in kreuzweiser Faserorientierung von mindestens ± 30° mit den hauptsächlichen Fasern.

3. Biegefeder nach Anspruch 1 und 2, dadurch gekennzeichnet, daß die einzelne Fasereinlage (4) aus einem Fasergewebe oder -gelege (4.1) mit 0/90°-Faserorientierung und einem Fasergewebe oder -gelege (4.2) mit ± 45°-Faserorientie-rung besteht.

4. Biegefeder nach Anspruch 1, dadurch gekennzeichnet, daß die Fasereinlagen (4) als Querstege über die Federdicke an Federdecklagen (2.1, 2.2) der Federober- und Federunterseite fußen.

5. Biegefeder nach Anspruch 1, dadurch gekennzeichnet, daß die Fasereinlagen (5) als Querstege über die Federdicke Abschnitte einer die Faserstränge (1) umschließenden Hülle (3) sind, welche über die Federbreite zu einem Mäander geformt die Faserstränge bündelt.

## Claims

1. A bending spring in the form of a curved spring leaf consisting of fibre strands embedded in a binding composition in unidirectional fibre orientation over the length of the spring, characterised in that over the width of the spring in the binding composition between the unidirectiodal fibre strands (1) are additionally provided a plurality of fibre inserts (4; 5) at a spacing from one another, in which respect these extend in the plane of flexure of the spring and in each case at least have a main fibre orientation redially to the axis of curveture of the spring.

2. A bending spring according to claim 1, characterised in that the individual fibre insert (4; 5) has further fibres in crosswise fibre orientation of at least ± 30° with the main fibres.

3. A bending spring according to claim 1 and 2, characterised in thatthe individuai fibre insert (4) consists of a fibre fabric or lay-up (4.1) with 0/90° fibre orientation and a fibre fabric or lay-up (4.2) with ± 45° fibre orientation.

4. A bending spring according to claim 1, characterised in that the fibre inserts (4) forming transverse webs over the spring thickness rest on spring surface layers (2.1, 2.2) of the spring's upper and lower sides.

5. A bending according to claim 1, characterised in that the fibre inserts (5) forming transverse webs over the spring thickness are portions of a sheath (3) which encioses the fibre strands (1) and which, formed over the spring width into a meander, bunches the fibre strands together.

## Revendications

1. Ressort de flexion en forme de lame courbe composé d'écheveaux de fibres d'orientation unidirectionnelle sur la longueur dudit ressort noyés dans une masse de liaison, ressort caractérisé par le fait que, dans sa largeur, une pluralité d'insertions de fibres (4; 5) sont en plus placés avec espacement entre elles, entre les écheveaux de fibres unidirectionnels (1), dans la masse de liaison, lesquelles insertions de fibres s'étendent dans le plan ue courbure dudit ressort et presentent chacune au moins une orientation principale des fibres radicale par rapport à l'axe de courbure de ce même ressort.

2. Ressort de flexion selon la revendication 1 caractérisé par le fait que chaque insertion de fibres (4; 5) comporte d'autres fibres en orientation croisée de ± 30° avec les fibres principales.

3. Ressort de flexion selon l'une des revendications 1 ou 2 caractérisé par le fait que chaque insertion de fibres (4) se compose d'un tissu ou non-tissé de fibres (4.1) avec orientation des fibres à 0/90° et d'un tissu ou nontissé de fibres (4.2) avec orientation des fibres à ± 45°.

4. Ressort de flexion selon la revendication 1 caractérisé par le fait que les insertions de fibres (4) s'appuient, en tant que traverses dans l'épaisseur du ressort, sur des revêtements (2.1, 2.2) des faces supérieure et inférieure dudit ressort.

5. Ressort de flexion selon la revendication 1 caractérisé par le fait que, en tant que traverses dans l'epaisseur du ressort, les insertions de fibres sont des parties d'une enveloppe (3) entourant les écheveaux de fibres (1), laquelle, formée en méandres sur la largeur du ressort, lie lesdits écheveaux de fibres en un faisceau.

FIG. 1

FIG. 2